# EUROPEAN PATENT APPLICATION

(11) **EP 4 773 382 A1**
(43) Date of publication of application: **08.07.2026**
(21) Application number: 24886428.2
(22) Date of filing: 30.10.2024
(51) Int. Cl.: H01M 50/30, H01M 50/211

(54) **GAS DISCHARGE FILM, SECONDARY BATTERY CASE, SECONDARY BATTERY, METHOD FOR MANUFACTURING GAS DISCHARGE FILM, AND METHOD FOR MANUFACTURING SECONDARY BATTERY CASE**

(30) Priority: 30.10.2023 KR 20230146958; 28.10.2024 KR 20240148831
(71) Applicant: LG Energy Solution, Ltd., Seoul 07335 (KR)
(72) Inventor: JU, Hye Yeong, Daejeon 34122 (KR); HWANG, Ji Young, Daejeon 34122 (KR); PARK, Eun Suk, Daejeon 34122 (KR); LEE, Yu Jin, Daejeon 34122 (KR); KIM, Sang Hun, Daejeon 34122 (KR); YU, Hyung Kyun, Daejeon 34122 (KR)
(74) Representative: Plasseraud IP
(86) International application number: PCT/KR2024/096438
(87) International publication number: WO 2025/095759

(57) **Abstract**

The present disclosure relates to a gas discharge film having excellent gas discharge performance and capable of being manufactured efficiently. A gas discharge film according to the present disclosure is configured to cover an opening formed in an exterior material of a secondary battery and discharge internal gas of the exterior material, and the gas discharge film may include an adhesive layer having adhesiveness by heat and having a through hole formed therein; and a permeable layer laminated to one surface of the adhesive layer to cover the through hole and having a higher gas permeability than the adhesive layer, wherein the permeable layer may have the same thickness as the adhesive layer or may be formed thicker than the adhesive layer.

## Description

### TECHNICAL FIELD

### CROSS-REFERENCE TO RELATED APPLICATIONS

The present application claims priority to Korean Patent Application No. 10-2023-0146958 filed on October 30, 2023 and Korean Patent Application No. 10-2024-0148831 filed on October 28, 2024 in the Republic of Korea, the disclosures of which are incorporated herein by reference.

### TECHNICAL FIELD

The present disclosure relates to a gas discharge film for discharging internal gas of a secondary battery, a secondary battery case including such a gas discharge film, a secondary battery including such a secondary battery case, and the like.

### BACKGROUND ART

Batteries that store electric energy may be generally divided into primary batteries and secondary batteries. Primary batteries are disposable consumable batteries, whereas secondary batteries are rechargeable batteries manufactured using materials in which the oxidation and reduction processes between current and substances are repeatable. That is, when a reduction reaction is performed on a material by current, the power is charged, and when an oxidation reaction is performed on a material, the power is discharged, and electricity is generated while such charging and discharging are repeatedly performed.

Secondary batteries may be classified into cylindrical cells, pouch cells, prismatic cells, and the like according to their shapes. Among them, pouch cells may be manufactured in a form where an electrode assembly in which a positive electrode, a negative electrode, and a separator are stacked is accommodated inside the pouch, and the outer portion of the pouch is sealed.

Meanwhile, an electrolyte may be accommodated together with the electrode assembly inside the pouch of the pouch cell. At this time, residual moisture of the electrolyte or moisture infiltrated from the outside may react with the lithium salt inside the pouch of the pouch cell to generate hydrogen fluoride (HF), and gases such as carbon dioxide, carbon monoxide, ethylene, and methane may be generated due to decomposition of the electrolyte. Additionally, depending on the material of the positive electrode included in the electrode assembly of the pouch cell, hydrogen and HF may be additionally generated, which may cause overheating due to overcharge and internal short circuit during the charging and discharging process. Accordingly, a large amount of gas may be generated inside the pouch. The pressure inside the pouch may increase due to such gas, and the increased pressure may cause a swelling phenomenon in which the pouch swells or a venting phenomenon in which a part of the pouch bursts. The pouch cell may include a structure capable of discharging gas inside the pouch to the outside to prevent the venting phenomenon.

As an example of a structure capable of discharging gas inside the pouch to the outside, there is a structure that forms a hole in the pouch and discharges gas through a gas discharge film. A pouch cell including a conventional gas discharge film has a problem that the adhesive material blocks the hole during the manufacturing process to reduce the gas discharge performance.

Additionally, the conventional gas discharge film is a semi-permeable film and attached to the pouch in a thermal fusion method, and there is a problem that the hole formed in the pouch is blocked due to excessive fusion when attaching the gas discharge film.

### SUMMARY

### TECHNICAL PROBLEM

The present disclosure is directed to providing a gas discharge film having excellent gas discharge performance and capable of preventing excessive fusion when attached to a pouch, a secondary battery case including such a gas discharge film, and a secondary battery including such a secondary battery case.

### TECHNICAL SOLUTION

A gas discharge film according to the present disclosure cover an opening formed in an exterior material of a secondary battery and discharge internal gas of the exterior material, and the gas discharge film may include an adhesive layer having adhesiveness by heat and having a through hole formed therein; and a permeable layer laminated to one surface of the adhesive layer to cover the through hole and having a higher gas permeability than the adhesive layer, wherein the permeable layer may have the same thickness as the adhesive layer or may be formed thicker than the adhesive layer.

The permeable layer and the adhesive layer may have a thickness of 10 µm to 100 µm.

The adhesive layer may be made of any one of PE, PP, and PPA, and the permeable layer may be made of a PTFE material.

A secondary battery case according to the present disclosure may include an exterior material provided to accommodate an electrode assembly therein and having an opening formed therein; and a gas discharge film cover the opening formed in the exterior material and discharge internal gas of the exterior material, wherein the gas discharge film may include an adhesive layer having adhesiveness by heat and having a through hole formed therein; and a permeable layer laminated to one surface of the adhesive layer and having a higher gas permeability than the adhesive layer, wherein the permeable layer may have the same thickness as the adhesive layer or may be formed thicker than the adhesive layer.

The through hole and the opening may overlap each other, and the diameter of the through hole may be larger than the diameter of the opening.

The center of the through hole and the center of the opening may coincide with each other.

The diameter of the opening may be 1 mm to 7 mm.

The adhesive layer of the gas discharge film may be adhered to an inner or outer surface of the exterior material.

The exterior material may be composed of a laminate sheet including a resin layer, and the adhesive layer of the gas discharge film may be made of any one of PE, PP, and PPA, and may be thermally fused to the resin layer of the laminate sheet.

A secondary battery according to the present disclosure may include an electrode assembly; an exterior material accommodating the electrode assembly and having an opening formed therein; and a gas discharge film cover the opening formed in the exterior material and discharge internal gas of the exterior material, wherein the gas discharge film may include an adhesive layer having adhesiveness by heat and having a through hole formed therein; and a permeable layer laminated to one surface of the adhesive layer and having a higher gas permeability than the adhesive layer, wherein the permeable layer may have the same thickness as the adhesive layer or may be formed thicker than the adhesive layer.

The exterior material may include a cup portion provided to accommodate the electrode assembly; a sealing portion forming an outermost part of the exterior material and sealing the inside thereof; and a terrace portion forming a periphery of the cup portion and disposed between the cup portion and the sealing portion, wherein the opening may be formed in the terrace portion.

The exterior material may include a cup portion provided to accommodate the electrode assembly, and the opening may be formed on a peripheral surface of the cup portion.

A method for manufacturing a gas discharge film according to the present disclosure may include a perforating step of forming a plurality of through holes in an adhesive layer having adhesiveness by heat; a laminating step of laminating the adhesive layer to a permeable layer having a higher gas permeability than the adhesive layer and having the same thickness as the adhesive layer or being formed thicker than the adhesive layer; and a cutting step of cutting the permeable layer and the adhesive layer into unit films having a preset size, wherein each unit film has the through hole.

In the perforating step, the plurality of through holes may be formed to have regular intervals with respect to a length direction and a width direction of the adhesive layer.

In the cutting step, the permeable layer and the adhesive layer may be cut at regular intervals with respect to a length direction and a width direction of the adhesive layer.

A method for manufacturing a secondary battery case according to the present disclosure may include a molding step of molding a cup portion that accommodates an electrode assembly in an exterior material; a perforating step of forming an opening in the exterior material where the cup portion is molded; a laminating step of manufacturing a gas discharge film by laminating the permeable layer having a higher gas permeability than the adhesive layer and having the same thickness as the adhesive layer or being formed thicker than the adhesive layer to the adhesive layer having adhesiveness by heat and having a through hole formed therein; and an attaching step of attaching the gas discharge film to the exterior material to cover the opening.

The attaching step may include a step of attaching the gas discharge film to the exterior material by pressing the gas discharge film and the exterior material with a high-temperature sealing device.

In the attaching step, the sealing device may press the entire area of the gas discharge film.

In the attaching step, the sealing device may apply heat and pressure to both sides of the gas discharge film and the exterior material.

The perforating step may include a step of forming the opening on a periphery of the cup portion formed in the exterior material.

The perforating step may include a step of forming the opening on a peripheral surface of the cup portion formed in the exterior material.

### ADVANTAGEOUS EFFECTS

The gas discharge film according to the present disclosure covers an opening formed in an exterior material of a secondary battery and discharges internal gas of the exterior material, and the gas discharge film may include an adhesive layer having adhesiveness by heat and having a through hole formed therein, and a permeable layer laminated to one surface of the adhesive layer to cover the through hole and having a higher gas permeability than the adhesive layer. At this time, the permeable layer may have the same thickness as the adhesive layer or may be formed thicker than the adhesive layer.

In this case, the thickness of the adhesive layer that is thermally fused to the exterior material of the secondary battery is formed relatively thin, and thus there is an advantageous effect of preventing the exterior material and the adhesive layer from being excessively fused to block the opening formed in the exterior material.

Additionally, the opening formed in the exterior material is covered only by the gas permeable layer, and the adhesive layer does not cover the opening, so that there is an advantageous effect of effectively discharging the internal gas of the secondary battery.

### BRIEF DESCRIPTION OF THE DRAWINGS

FIG. 1 is a perspective view showing a state in which a gas discharge film according to the present disclosure is attached to a secondary battery.
FIG. 2 is a cross-sectional view for describing the structure of a gas discharge film according to the present disclosure.
FIG. 3 is a view for describing a state in which a gas discharge film according to the present disclosure covers an opening of a secondary battery case.
FIG. 4 is a perspective view schematically showing an example of a secondary battery according to the present disclosure.
FIG. 5 is a perspective view schematically showing another example of a secondary battery according to the present disclosure.
FIG. 6 is a flow chart schematically showing a method for manufacturing a gas discharge film according to the present disclosure.
FIG. 7 is a perspective view schematically showing a state in which an adhesive layer and a permeable layer are laminated in a method for manufacturing a gas discharge film according to the present disclosure.
FIG. 8 is a perspective view for describing a process in which an adhesive layer and a permeable layer are cut in a method for manufacturing a gas discharge film according to the present disclosure.
FIG. 9 is a flow chart schematically showing a method for manufacturing a secondary battery case according to the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Gas discharge film

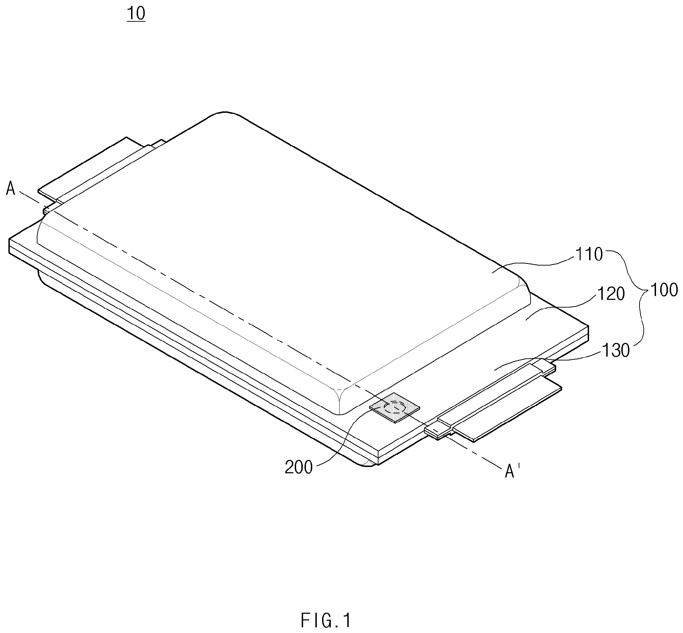

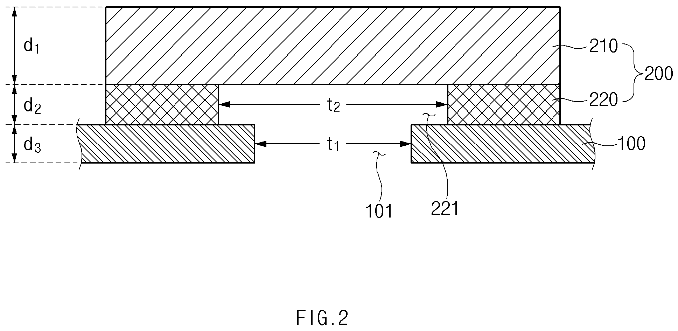

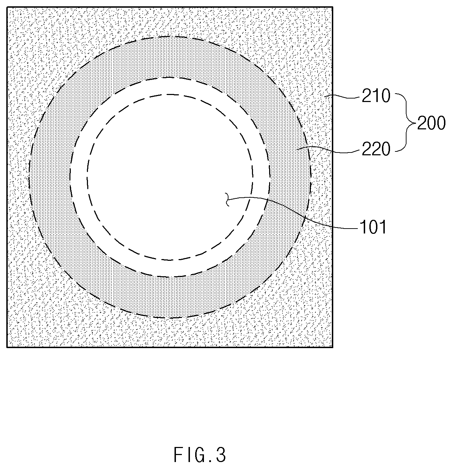

FIG. 1 is a perspective view showing a state in which a gas discharge film according to the present disclosure is attached to a secondary battery. FIG. 2 is a cross-sectional view for describing the structure of a gas discharge film according to the present disclosure. FIG. 3 is a view for describing a state in which a gas discharge film according to the present disclosure covers an opening of a secondary battery case.

Referring to FIGS. 1 to 3, a gas discharge film 200 according to the present disclosure covers an opening 101 formed in an exterior material 100 of a secondary battery 10 and discharges internal gas of the exterior material 100, and the gas discharge film 200 may include an adhesive layer 220 having adhesiveness by heat and having a through hole 221 formed therein and a permeable layer 210 laminated to one surface of the adhesive layer 220 to cover the through hole 221 and having a higher gas permeability than the adhesive layer 220. Here, the permeable layer 210 may have the same thickness as the adhesive layer 220 or may be formed thicker than the adhesive layer 220.

Here, the adhesive layer 220 may be coupled to the exterior material 100 of the secondary battery 10 in a thermal fusion method. In the gas discharge film 200, the thickness of the adhesive layer 220 that is fused to the exterior material 100 is formed relatively thin, and thus there is an advantageous effect of preventing the exterior material 100 and the adhesive layer 220 from being excessively fused to block the opening 101 formed in the exterior material 100.

The thickness d1 of the permeable layer 210 and the thickness d2 of the adhesive layer 220 may be formed in various ways. For example, the thickness d1 of the permeable layer 210 and the thickness d2 of the adhesive layer 220 may each have a value of 10 µm to 100 µm. At this time, the thickness d1 of the permeable layer 210 may be thicker than the thickness d2 of the adhesive layer 220.

In particular, the thickness d1 of the permeable layer 210 may be 60 µm to 100 µm, and the thickness d2 of the adhesive layer 220 may be 50 µm to 100 µm. Here, the thickness d1 of the permeable layer 210 may be the same as or thicker than the thickness d2 of the adhesive layer 220. For example, when the thickness d1 of the permeable layer 210 is 60 µm, the thickness d2 of the adhesive layer 220 may be 50 µm, and when the thickness d1 of the permeable layer 210 is 100 µm, the thickness d2 of the adhesive layer 220 may be 100 µm.

When the thickness d1 of the permeable layer 210 is 60 µm or less, the thickness d1 of the permeable layer 210 becomes relatively thin, and thus an electrolyte accommodated inside the exterior material 100 may leak to the outside through the permeable layer 210.

Additionally, when the thickness d1 of the permeable layer 210 is 1000 µm or more, the thickness d1 of the permeable layer 210 becomes thick, and thus the gas permeability of the internal gas of the exterior material 100 passing through the permeable layer 210 may decrease. Therefore, it is appropriate that the thickness d1 of the permeable layer 210 is formed to be 60 µm to 100 µm.

When the thickness d2 of the adhesive layer 220 is 50 µm or less, the adhesive layer 220 may be formed thin, and thus a coupling force between the adhesive layer 220 and the exterior material 100 may be lowered. Additionally, when the thickness d2 of the adhesive layer 220 is 100 µm or more, the adhesive layer 220 may be excessively fused to the exterior material 100, thereby blocking the opening 101 formed in the exterior material 100 or damaging the exterior material 100. Therefore, it is appropriate that the thickness d2 of the adhesive layer 220 is formed to be 50 µm to 100 µm.

Meanwhile, the permeable layer 210 and the adhesive layer 220 may be coupled in various ways. For example, the permeable layer 210 and the adhesive layer 220 may each be surface treated with plasma and then be thermally fused in a state of overlapping each other.

The permeable layer 210 of the gas discharge film 200 may be provided to cover the opening 101 of the exterior material 100. Additionally, the adhesive layer 220 may be disposed between the exterior material 100 and the permeable layer 210 to adhere the exterior material 100 and the permeable layer 210.

The adhesive layer 220 of the gas discharge film 200 may include a material having adhesiveness by heat. Materials having adhesiveness by heat include polyethylene (PE), polypropylene (PP), polypropylene-graft-maleic anhydride (PPA), and the like. Therefore, the adhesive layer 220 may include at least one of PE, PP, and PPA.

Additionally, as an example of a configuration for improving gas discharge performance, a through hole 221 may be formed in the adhesive layer 220 of the gas discharge film 200. Since the through hole 221 overlaps with the opening 101 formed in the exterior material 100, the internal gas of the exterior material 100 may pass through the opening 101 and the through hole 221, pass through the permeable layer 210, and be discharged to the outside.

Meanwhile, the permeable layer 210 of the gas discharge film 200 according to the present disclosure may have a cross-section of an approximately rectangular shape. This is only one example, and the permeable layer 210 may have a cross-section of a different shape.

The permeable layer 210 of the gas discharge film 200 is attached to the exterior material 100 to cover the opening 101 formed in the exterior material 100, and may allow the internal gas of the exterior material 100 to pass through. Specifically, the gas generated inside the exterior material 100 may pass through the opening 101 and then be discharged to the outside of the exterior material 100 through the permeable layer 210.

The permeable layer 210 of the gas discharge film 200 may have a higher gas permeability than the exterior material 100. Additionally, the permeable layer 210 may include a material that allows gases to be discharged but does not allow liquids to pass through. For example, the permeable layer 210 of the gas discharge film 200 may include a fluorine-based resin.

Specifically, the permeable layer 210 may be made of a polytetrafluoroethylene (PTFE) material. In this case, the electrolyte provided inside the exterior material 100 may not pass through the permeable layer 210, but the gas generated inside the exterior material 100 may pass through the permeable layer 210.

In FIG. 3, the adhesive layer 220 and the through hole 221 are shown as circular, but this is only one example. That is, the adhesive layer 220 may be disposed in a different shape for bonding the permeable layer 210 and the exterior material 100. Additionally, the through hole 221 may also be formed in a different shape.

Meanwhile, the gas discharge film 200 is coupled to the exterior material 100 of the secondary battery 10 in a thermal fusion method, and a part of the adhesive layer 220 melted by heat may not block the opening 101 of the exterior material 100. Specifically, the diameter t2 of the through hole 221 formed in the adhesive layers 220 is larger than the diameter t1 of the opening 101 formed in the exterior material 100, and thus, even when a part of the adhesive layer 220 is melted by heat, it may flow down to the upper area of the opening 101 and harden again in the upper area of the opening 101.

Therefore, even when the gas discharge film 200 and the exterior material 100 are thermally fused, the opening 101 of the exterior material 100 is not blocked, and thus the internal gas of the exterior material 100 may be discharged more efficiently.

### Secondary battery case

FIG. 1 shows an example of a secondary battery 10 according to the present disclosure, and also shows a secondary battery case in which an electrode assembly and an electrolyte are accommodated.

Referring to FIG. 1, a secondary battery case according to the present disclosure may include an exterior material 100 provided to accommodate an electrode assembly therein and having an opening 101 formed therein, and a gas discharge film 200 covering the opening 101 formed in the exterior material 100 and discharging internal gas of the exterior material 100. That is, the secondary battery case may have a structure in which the gas discharge film 200 is coupled to the exterior material 100 having the opening 101 formed therein.

The gas discharge film 200 may include an adhesive layer 220 having adhesiveness by heat and having a through hole 221 formed therein, and a permeable layer 210 laminated to one surface of the adhesive layer 220 and having a higher gas permeability than the adhesive layer 220, wherein the permeable layer 210 may have the same thickness as the adhesive layer 220 or may be formed thicker than the adhesive layer 220.

In this case, the opening 101 formed in the exterior material 100 is covered only by the gas permeable layer 210, and the adhesive layer 220 does not cover the opening 101, so that there is an advantageous effect of effectively discharging the internal gas of the housing 100.

Additionally, the adhesive layer 220 may be coupled to the exterior material 100 of the secondary battery 10 in a thermal fusion method. In the gas discharge film 200, the thickness of the adhesive layer 220 that is fused to the exterior material 100 is formed relatively thin, and thus there is an advantageous effect of preventing the exterior material 100 and the adhesive layer 220 from being excessively fused to block the opening 101 formed in the exterior material 100.

Meanwhile, the through hole 221 and the opening 101 overlap each other, and the diameter t2 of the through hole 221 may be larger than the diameter t1 of the opening 101. Here, the area of the through hole 221 may be formed wider than the area of the opening 101.

Specifically, the center of the through hole 221 and the center of the opening 101 may coincide with each other, and the entire area of the opening 101 may be included inside the through hole 221. In particular, the diameter t2 of the through hole 221 may be approximately 0 to 4 mm larger than the diameter t1 of the opening 101.

When the diameter t2 of the through hole 221 is smaller than the diameter t1 of the opening 101, a part of the opening 101 is blocked by the adhesive layer 220, and thus the gas discharge efficiency may be lowered. Additionally, when the diameter t2 of the through hole 221 is excessively larger than the diameter t1 of the opening 101, the adhesive force of the adhesive layer 220 may be reduced.

Therefore, the diameter t2 of the through hole 221 should be formed appropriately, and when the diameter t2 of the through hole 221 is approximately 0 to 4 mm larger than the diameter t1 of the opening 101, the gas discharge efficiency may be reconsidered, and the adhesive force of the adhesive layer 220 may be maintained high.

For example, when the diameter t1 of the circular opening 101 is approximately 4.5 mm or more and 5.5 mm or less, the diameter t2 of the circular through hole 221 may be approximately 6.5 mm or more and 7.5 mm or less. Additionally, when the diameter t1 of the circular opening 101 is approximately 5 mm, the diameter t2 of the circular through hole 221 may be approximately 5 mm or more and 9 mm or less.

Additionally, the diameter t1 of the opening 101 may have a value of 1 mm or more and 7 mm or less. At this time, the diameter t2 of the through hole 221 may be approximately 0 to 4 mm larger than the diameter t1 of the opening 101. That is, the diameter t2 of the through hole 221 may have a value of 1 mm or more and 11 mm or less.

The exterior material 100 is composed of a laminate sheet including a resin layer, and the adhesive layer 220 of the gas discharge film 200 may be made of any one of PE, PP, and PPA. At this time, the adhesive layer 220 may be thermally fused to the resin layer of the laminate sheet.

Specifically, the exterior material 100 may include an inner layer, a metal layer, and an outer layer, wherein the inner layer may have sealing properties by heat and pressure. The exterior material 100 accommodates the electrode assembly therein and then the inner layer thereof may be sealed by heat and pressure. The metal layer may be mainly Al, STS, and the like. Additionally, the outer layer may have insulating properties.

The inner layer capable of sealing the exterior material 100 through the sealing may be made of one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fiber. In particular, a polyolefin-based resin such as polypropylene (PP) or polyethylene (PE) may be mainly used.

Meanwhile, the adhesive layer 220 of the gas discharge film 200 may be adhered to an inner or outer surface of the exterior material 100. That is, the gas discharge film 200 may be accommodated inside the exterior material 100 or exposed to the outside of the exterior material 100. When the gas discharge film 200 is disposed on the inner surface of the exterior material 100, the gas generated inside the exterior material 100 may pass through the permeable layer 210 and then pass through the opening 101 to be discharged to the outside of the exterior material 100.

Preferably, the gas discharge film 200 may be disposed on the outer surface of the exterior material 100 considering moisture penetration, ease of manufacturing, and the like. Specifically, the gas discharge film 200 may be disposed on the terrace portion 120 of the exterior material 100. That is, the opening 101 of the exterior material 100 may be formed on the terrace portion 120. As described above, the terrace portion 120 of the exterior material 100 forms a periphery of the cup portion 110 and may be disposed between the cup portion 110 and the sealing portion 130.

Since the sealing portion 130 of the exterior material 100 is sealed on the facing surfaces with a seal, the gas discharge performance may be reduced when the gas discharge film 200 is disposed on the sealing portion 130. Therefore, to prevent the gas discharge performance of the gas discharge film 200 from being reduced, the gas discharge film 200 may be disposed on the terrace portion 120. Additionally, the gas discharge film 200 may be disposed to be spaced apart from the electrode assembly, so that the internal gas of the exterior material 100 may be discharged to the outside through the opening 101 more efficiently.

### Secondary battery

FIG. 1 shows a secondary battery according to an embodiment of the present disclosure.

Referring to FIG. 1, a secondary battery 10 according to an embodiment of the present disclosure may include an electrode assembly, an exterior material 100 accommodating the electrode assembly and having an opening 101 formed therein, and a gas discharge film 200 covering the opening 101 formed in the exterior material 100 and discharging internal gas of the exterior material 100. At this time, the gas discharge film 200 may include an adhesive layer 220 having adhesiveness by heat and having a through hole 221 formed therein, and a permeable layer 210 laminated to one surface of the adhesive layer 220 and having a higher gas permeability than the adhesive layer 220, wherein the permeable layer 210 may have the same thickness as the adhesive layer 220 or may be formed thicker than the adhesive layer 220.

In this case, the opening 101 formed in the exterior material 100 is covered only by the gas permeable layer 210, and the adhesive layer 220 does not cover the opening 101, so that there is an advantageous effect of effectively discharging the internal gas of the secondary battery 10.

Additionally, the adhesive layer 220 may be coupled to the exterior material 100 of the secondary battery 10 in a thermal fusion method. In the gas discharge film 200, the thickness of the adhesive layer 220 that is fused to the exterior material 100 is formed relatively thin, and thus there is an advantageous effect of preventing the exterior material 100 and the adhesive layer 220 from being excessively fused to block the opening 101 formed in the exterior material 100.

The secondary battery 10 may include an electrode assembly (not shown), an exterior material 100, and a gas discharge film 200. The secondary battery 10 may refer to a secondary battery including an exterior material 100 capable of changing shape among various forms of a secondary battery that can be charged and discharged. That is, the exterior material 100 may be a pouch-type exterior material composed of a laminate sheet.

The electrode assembly of the secondary battery 10 may include a positive electrode, a negative electrode, and a separator. Here, the separator may be disposed between the positive electrode and the negative electrode to physically separate the positive electrode and the negative electrode. The electrode assembly has a form in which the positive electrode, the negative electrode, and the separator are stacked, or a jelly-roll form in which the positive electrode, the negative electrode, and the separator are wound.

The secondary battery 10 may include an electrode lead. The electrode lead may be electrically connected to the electrode assembly and be disposed to protrude outward from the exterior material 100. The secondary battery 10 may provide electric energy to the outside by the electrode lead protruding outward from the exterior material 100. Therefore, the electrode lead may be a conductor.

The lead film may cover the electrode lead so that the exterior material 100 and the electrode lead are insulated from each other. Specifically, the lead film may be disposed on both surfaces of the electrode lead to cover the electrode lead. The lead film may be configured in a pair and may be disposed on both surfaces of the electrode lead, respectively.

The exterior material 100 may include a cup portion 110 provided to accommodate the electrode assembly, a sealing portion 130 forming an outermost part of the exterior material 100 and sealing the inside thereof, and a terrace portion 120 forming a periphery of the cup portion 110 and disposed between the cup portion 110 and the sealing portion 130.

Here, the cup portion 110 of the exterior material 100 may refer to a part where a space for accommodating an electrode assembly is formed by molding the pouch film. The sealing portion 130 may refer to a part forming the outermost part of the exterior material 100, which is sealed by heat and pressure. Additionally, the terrace portion 120 forms a periphery of the cup portion 110 and may be disposed between the cup portion 110 and the sealing portion 130. Specifically, at the periphery of the cup portion 110 except for the cup portion 110, a part sealed by the sealing may be the sealing portion 130, and the other part may be the terrace portion 120.

The sealing portion 130 may include a part where the electrode lead protrudes. The part of the sealing portion 130 where the electrode lead protrudes may be sealed with the lead film. Additionally, the facing exterior materials 100 may be sealed to each other at a part of the sealing portion 130 where the electrode lead does not protrude.

Meanwhile, gas is generated as the secondary battery 10 is repeatedly charged and discharged, which may increase the pressure inside the exterior material 100. If the pressure inside the exterior material 100 is excessively increased, venting phenomenon or the like may occur, and thus the secondary battery 10 may lose its function.

Specifically, an electrolyte may be accommodated together with an electrode assembly inside the exterior material 100 of the secondary battery 10. At this time, residual moisture of the electrolyte or moisture infiltrated from the outside may react with the lithium salt inside the exterior material 100 of the secondary battery 10 to generate HF, and gases such as carbon dioxide, carbon monoxide, ethylene, and methane may be generated due to decomposition of the electrolyte. Additionally, depending on the material of the positive electrode included in the electrode assembly of the secondary battery 10, hydrogen and HF may be additionally generated, which may cause overheating due to overcharge and internal short circuit during the charging and discharging process. Accordingly, a large amount of gas may be generated inside the exterior material 100. The pressure inside the exterior material increases due to such gas, and the increased pressure may cause a swelling phenomenon in which the exterior material 100 swells or a venting phenomenon in which a part of the exterior material 100 bursts.

The secondary battery 10 according to the present disclosure may include a structure capable of discharging gas inside the exterior material 100 to the outside of the exterior material 100 to prevent the venting phenomenon from occurring.

As an example of a configuration capable of discharging gas inside the exterior material 100 to the outside of the exterior material 100, an opening 101 may be formed in a part of the exterior material 100 of the secondary battery 10. Additionally, the secondary battery 10 may include a gas discharge film 200 disposed in a part of the exterior material 100 where the opening 101 is formed.

Referring to FIG. 1, the opening 101 formed in the exterior material 100 may have a roughly circular cross-section. This is only one example, and the opening 101 may be formed in a different shape. Additionally, a plurality of openings 101 may be formed in the exterior material 100.

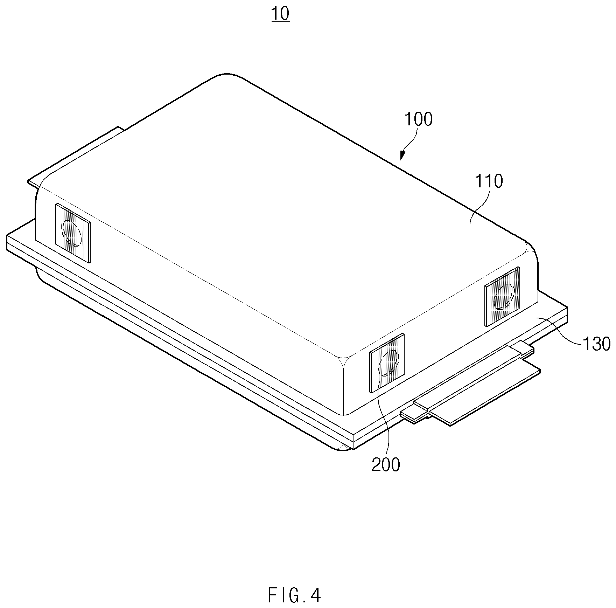

Meanwhile, FIG. 4 is a perspective view schematically showing another embodiment of a secondary battery according to the present disclosure. The secondary battery shown in FIG. 4 may differ from the secondary battery shown in FIG. 1 in the arrangement of the gas discharge film.

Referring to FIG. 4, the gas discharge film 200 of the secondary battery 10 may be disposed in the cup portion 110 of the exterior material 100. In this regard, the exterior material 100 may include the cup portion 110 molded in a concave shape for the arrangement of the electrode assembly. The cup portion 110 may include a surface on which the electrode assembly is placed and a peripheral surface bent at the surface to form a border. Here, the gas discharge film 200 may be disposed on the peripheral surface forming the border of the cup portion 110.

In this regard, when a plurality of secondary batteries 10 are disposed for the manufacture of a battery module, the secondary batteries 10 may be stacked side by side. At this time, the plurality of secondary batteries 10 may be disposed in a state where one surface of the cup portion 110 is in contact with each other. Specifically, the surface where the adjacent secondary batteries 10 are in contact with each other may be a surface having the largest area in the cup portion 110 where the electrode assembly is placed. Therefore, when the gas discharge film 200 is disposed on the surface where the electrode assembly is placed in the cup portion 110, the gas discharge efficiency may be reduced. That is, in the secondary battery 10 according to the present disclosure, the gas discharge film 200 is disposed on the peripheral surface of the cup portion 110, so that more efficient gas discharge is possible even when the secondary batteries 10 are stacked for the manufacture of a battery module.

Meanwhile, the secondary battery 10 shown in FIG. 4 may include a plurality of gas discharge films 200. Here, the gas discharge films 200 may each be disposed at different locations on the peripheral surface of the cup portion 110. Since the secondary battery 10 includes the plurality of gas discharge films 200, the gas inside the exterior material 100 may be efficiently released.

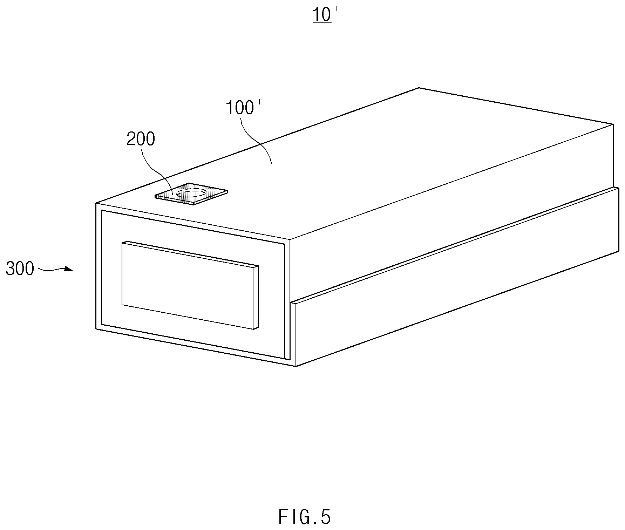

FIG. 5 is a perspective view schematically showing still another embodiment of a secondary battery according to the present disclosure. The secondary battery shown in FIG. 5 may have a different shape of the exterior material from the secondary battery shown in FIGS. 1 and 4.

Referring to FIG. 5, a secondary battery 10' may include an exterior material 100' surrounding the electrode assembly. That is, the exterior material 100' of the secondary battery 10' may be disposed to surround the side surface of the electrode assembly and may be coupled to a cap 300 disposed at both ends of the electrode assembly. Here, the exterior material 100' and the cap 300 may be coupled through sealing or the like.

Specifically, one end and the other end of the exterior material 100' surrounding the side surface of the electrode assembly may be coupled through sealing or the like. Additionally, one end and the other end of the electrode assembly that are not covered by the exterior material 100' may be covered by the cap 300.

Referring to FIG. 5, the gas discharge film 200 may be disposed on one surface of the exterior material 100'. Specifically, the gas discharge film 200 may be disposed on an outer surface of the exterior material 100'. The gas discharge film 200 may be disposed on both an inner surface and an outer surface of the exterior material 100'. Preferably, the gas discharge film 200 may be disposed on the outer surface of the exterior material 100' considering gas discharge efficiency, ease of manufacturing, and the like. Therefore, gas generated inside the exterior material 100' and the cap 300 may be efficiently discharged to the outside.

That the adhesive layer 220 of the gas discharge film 200 includes a through hole 221 having a larger area than the opening formed in the exterior material 100' is the same as in the case of the secondary battery 10 shown in FIGS. 1 and 4.

The shape of the secondary battery 10' shown in FIG. 5 is only one example. The position where the exterior material 100' is disposed and the number of the exterior materials 100' may vary within a range capable of exhibiting the effects of the present disclosure. Although not described in detail in the present disclosure, the secondary battery 10' may further include a gas removal member formed in the cap 300.

### Method for manufacturing gas discharge film

A method for manufacturing a gas discharge film according to the present disclosure may refer to a method for manufacturing a unit film 1300 that is coupled to an exterior material 100 to discharge gas inside the exterior material 100. That is, the unit film 1300 manufactured by the method for manufacturing a gas discharge film may be used in the manufacture of a secondary battery 10. Additionally, the unit film 1300 coupled to an exterior material 100 through a process such as sealing may become the gas discharge film 200.

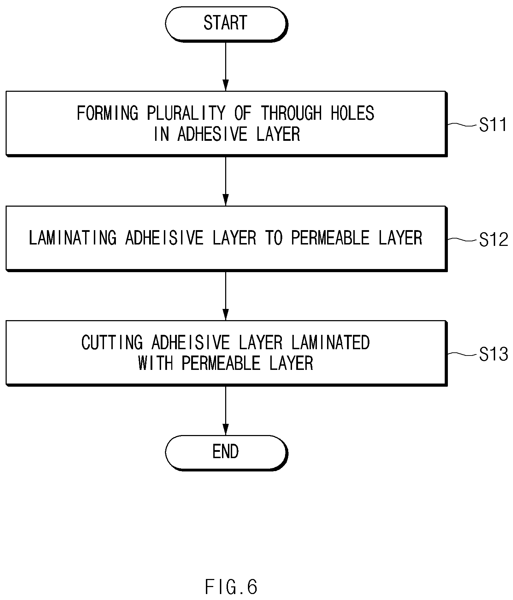

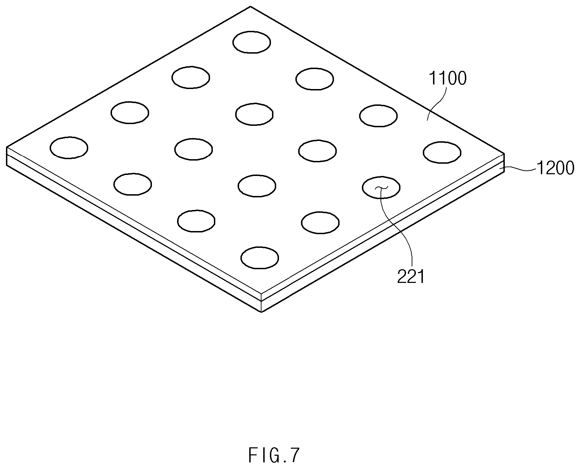

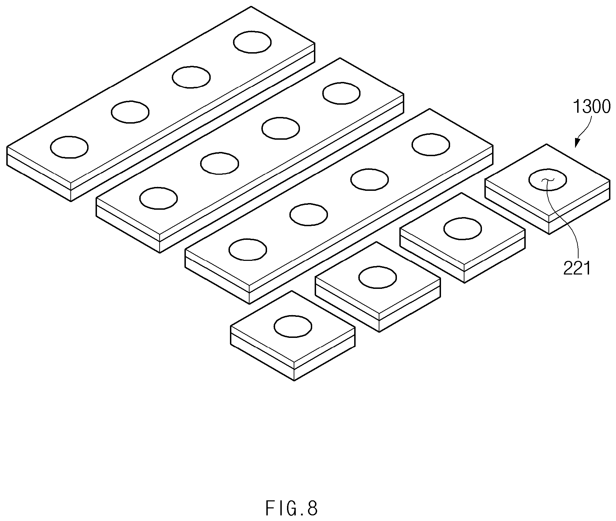

FIG. 6 is a flow chart schematically showing a method for manufacturing a gas discharge film according to the present disclosure. FIG. 7 is a perspective view schematically showing a state in which an adhesive layer and a permeable layer are laminated in a method for manufacturing a gas discharge film according to the present disclosure. FIG. 8 is a perspective view for describing a process in which an adhesive layer and a permeable layer are cut in a method for manufacturing a gas discharge film according to the present disclosure.

Referring to FIGS. 6 to 8, the method for manufacturing a gas discharge film according to the present disclosure may include a perforating step S11 of forming a plurality of through holes 221 in an adhesive layer 1100 having adhesiveness by heat, a laminating step S12 of laminating the adhesive layer 220 to a permeable layer 1200 having a higher gas permeability than the adhesive layer 1100 and having the same thickness as the adhesive layer 1100 or being formed thicker than the adhesive layer 1100, and a cutting step S13 of cutting the permeable layer 1200 and the adhesive layer 1100 into unit films having a preset size, wherein each unit film has the through hole 221.

In this case, the opening 101 formed in the exterior material 100 is covered only by the gas permeable layer 210, and the adhesive layer 220 does not cover the opening 101, so that the gas discharge film 200 manufactured by the above manufacturing method has an advantageous effect of effectively discharging the internal gas of the secondary battery 10.

Additionally, the adhesive layer 220 may be coupled to the exterior material 100 of the secondary battery 10 in a thermal fusion method. In the gas discharge film 200, the thickness of the adhesive layer 220 that is fused to the exterior material 100 is formed relatively thin, and thus, when this gas discharge film 200 is fused to the exterior material 100, there is an advantageous effect of preventing the exterior material 100 and the adhesive layer 220 from being excessively fused to block the opening 101 formed in the exterior material 100.

In the perforating step S11, a plurality of through holes 221 may be formed in the adhesive layer 1100 having adhesiveness by heat. At this time, the through holes 221 may have a shape that penetrates from one surface of the adhesive layer 1100 to the other surface, and may have an approximately circular cross-section. However, the cross-sectional shape of the through holes 221 may vary.

In the perforating step S11, a plurality of through holes 221 may be formed to have regular intervals from each other with respect to a length direction and a width direction of the adhesive layer 1100. Therefore, a unit film 1300 of the same size may be efficiently manufactured through the cutting step S13 to be described later.

Referring to FIG. 7, in the laminating step S12, the adhesive layer 1100 may be laminated with the permeable layer 1200 having a higher gas permeability than the adhesive layer 1100. Here, the adhesive layer 1100 may be in a state where the through hole 221 is perforated. Additionally, the entire shape of the adhesive layer 1100 may be approximately similar to the entire shape of the permeable layer 1200. Therefore, the permeable layer 1200 may be disposed to cover the adhesive layer 1100.

Referring to FIG. 8, in the cutting step S13, the adhesive layer 1100 laminated with the permeable layer 1200 may be cut into unit films 1300 having a preset size. Here, the adhesive layer 1100 laminated to the permeable layer 1200 may be cut so that each unit film 1300 has a through hole 221.

Meanwhile, in the cutting step S13, the adhesive layer 1100 laminated with the permeable layer 1200 may be cut at regular intervals with respect to a length direction and a width direction of the adhesive layer 1100. Therefore, each unit film 1300 may have the same shape while including the through hole 221. That is, unit films 1300 of the same size may be efficiently manufactured through the cutting step S13.

That is, the method for manufacturing a gas discharge film according to the present disclosure may manufacture a plurality of unit films 1300 having the same shape through one cycle. Therefore, the efficiency and economy of the manufacturing process may be improved.

### Method for manufacturing secondary battery case

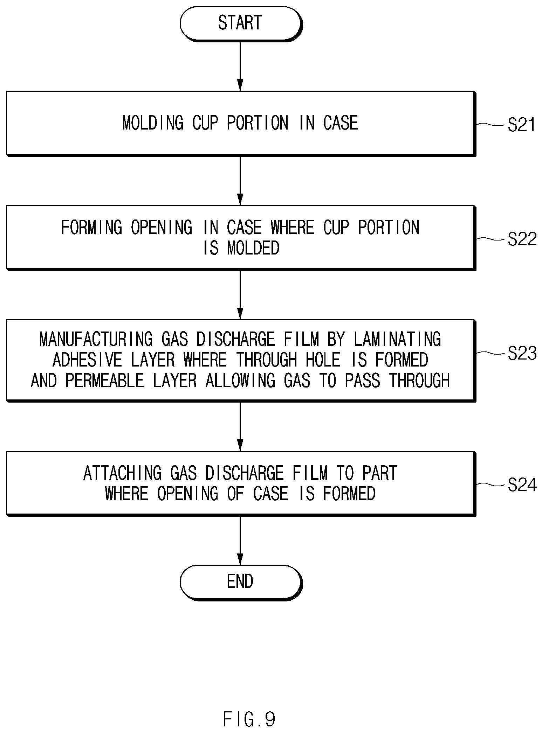

FIG. 9 is a flow chart schematically showing a method for manufacturing a secondary battery case according to the present disclosure.

Referring to FIG. 9, a method for manufacturing a secondary battery case according to the present disclosure may include a molding step S21 of molding a cup portion 110 that accommodates an electrode assembly in an exterior material 100, a perforating step S22 of forming an opening 101 in the exterior material 100 where the cup portion 110 is molded, a laminating step S23 of manufacturing a gas discharge film 200 by laminating the permeable layer 210 having a higher gas permeability than the adhesive layer 220 and having the same thickness as the adhesive layer 220 or being formed thicker than the adhesive layer 220 to the adhesive layer 220 having adhesiveness by heat and having a through hole 221 formed therein, and an attaching step S24 of attaching the gas discharge film 200 to the exterior material 100 so as to cover the opening 101.

In this case, the opening 101 formed in the exterior material 100 is covered only by the gas permeable layer 210, and the adhesive layer 220 does not cover the opening 101, so that the secondary battery case manufactured by the above manufacturing method has an advantageous effect of effectively discharging internal gas through the gas discharge film 200.

Additionally, the adhesive layer 220 may be coupled to the exterior material 100 of the secondary battery 10 in a thermal fusion method. In the gas discharge film 200, the thickness of the adhesive layer 220 that is fused to the exterior material 100 is formed relatively thin, and thus, when this gas discharge film 200 is fused to the exterior material 100, there is an advantageous effect of preventing the exterior material 100 and the adhesive layer 220 from being excessively fused to block the opening 101 formed in the exterior material 100.

In the secondary battery case according to the present disclosure, a form in which a space for accommodating an electrode assembly is formed by molding is described as an example. That is, the secondary battery case may refer to an exterior material of a pouch-type secondary battery. Therefore, in the molding step S21 of the method for manufacturing a secondary battery case, the cup portion 110 may be molded on a pouch film. For example, a punch of a molding device may press the pouch film to mold the cup portion 110.

After the molding step S21, a perforating step S22 may be performed. In the perforating step S22, an opening 101 may be formed on the pouch film where the cup portion 110 is molded. Here, the method of forming the opening 101 may vary. The opening 101 may have a shape that penetrates from one surface of the pouch film to the other surface, and may have an approximately circular cross-section. However, the cross-sectional shape of the opening 101 may vary.

The position where the opening 101 is formed may vary depending on the shape of the secondary battery case manufactured in the perforating step S22. For example, the opening 101 may be formed on a periphery of the cup portion 110 formed in the pouch film, or may be formed on a peripheral surface of the cup portion 110 formed in the pouch film.

After the perforating step S22, a laminating step S23 may be performed. In the laminating step S23, the gas discharge film 200 may be manufactured by laminating the adhesive layer 220 in which the through hole 221 is formed and the permeable layer 210 that allows gas to pass through. That is, the gas discharge film 200 manufactured through the laminating step S23 may include the adhesive layer 220 and the permeable layer 210.

In the laminating step S23, the permeable layer 210 and the adhesive layer 220 may be coupled in various ways. For example, the permeable layer 210 and the adhesive layer 220 may may each be surface treated with plasma and then be thermally fused in a state of overlapping each other.

In the method for manufacturing a secondary battery case according to the present disclosure, the case in which the laminating step S23 is performed after the perforating step S22 is described as an example (see FIG. 9). However, the perforating step S22 and the laminating step S23 may be performed in reverse order.

Meanwhile, in the method for manufacturing a secondary battery case according to the present disclosure, the area of the through hole 221 may be formed wider than the area of the opening 101. Therefore, the phenomenon in which the adhesive layer 220 blocks the opening 101 during the manufacturing process may be prevented.

After the laminating step S23, an attaching step S24 may be performed. In the attaching step S24, the gas discharge film 200 may be attached to a part where the opening 101 of the pouch film is formed. That is, the opening 101 may be covered by the gas discharge film 200.

For example, in the attaching step S24, the gas discharge film 200 may be attached to the pouch film by heat. Specifically, the attaching step S24 may be a step of attaching the gas discharge film 200 to the exterior material 100 by pressing the gas discharge film 200 and the exterior material 100 with a high-temperature sealing device.

That is, the gas discharge film 200 may be attached to the pouch film through sealing of the sealing device. A part of the adhesive layer 220 may be melted by heat to have adhesiveness, and the gas discharge film 200 may be attached to the pouch film by the adhesiveness of the adhesive layer 220.

Meanwhile, in the attaching step S24, the above-described sealing device may press the entire area of the gas discharge film 200.

Conventionally, the adhesive layer 220 is disposed in a form of covering the opening 101. In this case, when the sealing device applies heat to the entire area of the gas discharge film 200, a part of the adhesive layer 220 covering the opening 101 may be melted by the heat. That is, a part of the adhesive layer 220 melted by the heat may block the opening 101 or cause a defect on the outer surface of the opening 101. Therefore, conventionally, the sealing device may apply heat only to a part corresponding to the shape of the opening 101. As a result, high degree of accuracy is required in the attaching process, and thus defects are highly likely to occur.

On the other hand, in the method for manufacturing a secondary battery case according to the present disclosure, a through hole 221 is formed in the adhesive layer 220, and the area of the through hole 221 may be larger than the area of the opening 101. That is, there is no part of the adhesive layer 220 that covers the opening 101, and thus, even if the sealing device seals the entire area of the gas discharge film 200, the possibility of occurrence of defects may be significantly reduced. Therefore, the efficiency of the process may be improved.

Additionally, in the attaching step S24, the above-described sealing device may apply heat and pressure to both sides of the gas discharge film 200 and the exterior material 100.

Conventionally, the adhesive layer 220 is disposed in a form of covering the opening 101. In this case, when the sealing device applies heat to the pouch film, the heat may be directly applied to the adhesive layer 220 covering the opening 101 through the opening 101. Therefore, a part of the adhesive layer 220 may be melted by the heat, and it is highly likely that defects may occur in the process, such as a part of the melted adhesive layer 220 blocking the opening 101. Additionally, the sealing device applies heat only to the gas discharge film 200, which may result in weakening the adhesive force of the gas discharge film 200.

On the other hand, in the method for manufacturing a secondary battery case according to the present disclosure, a through hole 221 is formed in the adhesive layer 220, and the area of the through hole 221 may be larger than the area of the opening 101. That is, there is no part of the adhesive layer 220 that covers the opening 101. Therefore, even if the sealing device applies heat to the pouch film, the possibility that the melted adhesive layer 220 will move to the position where the opening 101 is formed may be reduced. That is, the possibility of occurrence of defects during the process may be significantly reduced. Accordingly, the efficiency of the process may be improved.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

| | | | |
|---|---|---|---|
| 10, 10': | Secondary battery | 100, 100': | Exterior material |
| 101: | Opening | 110: | Cup portion |
| 120: | Terrace portion | 130: | Sealing portion |
| 200: | Gas discharge film | 210: | Permeable layer |
| 220: | Adhesive layer | 221: | Through hole |
| 300: | Cap | 1100: | Adhesive layer |
| 1200: | Permeable layer | 1300: | Unit film |

## Claims

1. A gas discharge film cover an opening formed in an exterior material of a secondary battery and discharge internal gas of the exterior material, the gas discharge film comprising:
an adhesive layer having adhesiveness by heat and having a through hole formed therein; and
a permeable layer laminated to one surface of the adhesive layer to cover the through hole and having a higher gas permeability than the adhesive layer,
wherein the permeable layer has the same thickness as the adhesive layer or is formed thicker than the adhesive layer.

2. The gas discharge film according to claim 1,
wherein the permeable layer and the adhesive layer have a thickness of 10 µm to 100 µm.

3. The gas discharge film according to claim 1,
wherein the adhesive layer is made of any one of PE, PP, and PPA, and
the permeable layer is made of a PTFE material.

4. A secondary battery case, comprising:
an exterior material provided to accommodate an electrode assembly therein and having an opening formed therein; and
a gas discharge film cover the opening formed in the exterior material and discharge internal gas of the exterior material,
wherein the gas discharge film comprises:
an adhesive layer having adhesiveness by heat and having a through hole formed therein; and
a permeable layer laminated to one surface of the adhesive layer and having a higher gas permeability than the adhesive layer,
wherein the permeable layer has the same thickness as the adhesive layer or is formed thicker than the adhesive layer.

5. The secondary battery case according to claim 4,
wherein the through hole and the opening overlap each other, and the diameter of the through hole is larger than the diameter of the opening.

6. The secondary battery case according to claim 4,
wherein the center of the through hole and the center of the opening coincide with each other.

7. The secondary battery case according to claim 6,
wherein the diameter of the opening is 1 mm to 7 mm.

8. The secondary battery case according to claim 4,
wherein the adhesive layer of the gas discharge film is adhered to an inner or outer surface of the exterior material.

9. The secondary battery case according to claim 5,
wherein the exterior material is composed of a laminate sheet comprising a resin layer, and
the adhesive layer of the gas discharge film is made of any one of PE, PP, and PPA, and is thermally fused to the resin layer of the laminate sheet.

10. A secondary battery, comprising:
an electrode assembly;
an exterior material accommodating the electrode assembly and having an opening formed therein; and
a gas discharge film cover the opening formed in the exterior material and discharge internal gas of the exterior material,
wherein the gas discharge film comprises:
an adhesive layer having adhesiveness by heat and having a through hole formed therein; and
a permeable layer laminated to one surface of the adhesive layer and having a higher gas permeability than the adhesive layer,
wherein the permeable layer has the same thickness as the adhesive layer or is formed thicker than the adhesive layer.

11. The secondary battery according to claim 10,
wherein the exterior material comprises:
a cup portion provided to accommodate the electrode assembly;
a sealing portion forming an outermost part of the exterior material and sealing the inside thereof; and
a terrace portion forming a periphery of the cup portion and disposed between the cup portion and the sealing portion,
wherein the opening is formed in the terrace portion.

12. The secondary battery according to claim 10,
wherein the exterior material comprises a cup portion provided to accommodate the electrode assembly, and
the opening is formed on a peripheral surface of the cup portion.

13. A method for manufacturing a gas discharge film, comprising:
a perforating step of forming a plurality of through holes in an adhesive layer having adhesiveness by heat;
a laminating step of laminating the adhesive layer to a permeable layer having a higher gas permeability than the adhesive layer and having the same thickness as the adhesive layer or being formed thicker than the adhesive layer; and
a cutting step of cutting the permeable layer and the adhesive layer into unit films having a preset size, wherein each unit film has the through hole.

14. The method for manufacturing a gas discharge film according to claim 13,
wherein in the perforating step, the plurality of through holes are formed to have regular intervals with respect to a length direction and a width direction of the adhesive layer.

15. The method for manufacturing a gas discharge film according to claim 13,
wherein in the cutting step, the permeable layer and the adhesive layer are cut at regular intervals with respect to a length direction and a width direction of the adhesive layer.

16. A method for manufacturing a secondary battery case, comprising:
a molding step of molding a cup portion that accommodates an electrode assembly in an exterior material;
a perforating step of forming an opening in the exterior material where the cup portion is molded;
a laminating step of manufacturing a gas discharge film by laminating the permeable layer having a higher gas permeability than the adhesive layer and having the same thickness as the adhesive layer or being formed thicker than the adhesive layer to the adhesive layer having adhesiveness by heat and having a through hole formed therein; and
an attaching step of attaching the gas discharge film to the exterior material to cover the opening.

17. The method for manufacturing a secondary battery case according to claim 16,
wherein the attaching step comprises:
a step of attaching the gas discharge film to the exterior material by pressing the gas discharge film and the exterior material with a high-temperature sealing device.

18. The method for manufacturing a secondary battery case according to claim 17,
wherein in the attaching step, the sealing device presses the entire area of the gas discharge film.

19. The method for manufacturing a secondary battery case according to claim 17,
wherein in the attaching step, the sealing device applies heat and pressure to both sides of the gas discharge film and the exterior material.

20. The method for manufacturing a secondary battery case according to claim 16,
wherein the perforating step comprises:
a step of forming the opening on a periphery of the cup portion formed in the exterior material.

21. The method for manufacturing a secondary battery case according to claim 16,
wherein the perforating step comprises:
a step of forming the opening on a peripheral surface of the cup portion formed in the exterior material.
